# EUROPEAN PATENT APPLICATION

(11) **EP 1 726 213 A1**
(43) Date of publication of application: **29.11.2006**
(21) Application number: 05104424.6
(22) Date of filing: 24.05.2005
(51) Int. Cl.: A23F 5/18, A23L 2/84

(54) **Soluble coffee product**

(71) Applicant: NESTEC S.A., 1800 Vevey (CH)
(72) Inventor: BEL-RHLID, Rachid, 1073, SAVIGNY (CH); KRAEHENBUEHL, Karin, 1926, FULLY (CH); LERCH, Konrad, 8118, PFAFFHAUSEN (CH); AESCHBACH, Robert, 1800, VEVEY (CH)
(74) Representative: Schüller, Cornelis

(57) **Abstract**

A coffee product derived from roast and ground coffee beans has reduced levels of chlorogenic acid lactones relative to the levels of chlorogenic acids. The product can be prepared by treating a coffee extract with an enzyme so as to hydrolyse at least a portion of the chlorogenic acid lactones present in the extract. Alternatively or additionally, it may be provided by contacting a coffee extract with a sorbent or solvent which is suitable for removing apolar components and is at least partially saturated with chlorogenic acid. The product has reduced bitterness.

## Description

### Field of the Invention

The present invention relates to a coffee product, a method of preparing a coffee product and the use of enzymes, sorbents and/or solvent extraction to treat a coffee extract so as to provide such a product.

### Background of the Invention

A coffee beverage is generally produced in three steps involving roasting of the green beans, grinding of the roasted beans and then extraction of the coffee components from the ground beans. Within the roasting step, the thermal treatment generates a large variety of aroma and taste molecules which are absent from the original green bean. The chemical transformations involved in the roasting process are numerous and, to date, not all fully elucidated. Reactions and chemical transformations that are known to occur during the roasting process include, for instance, dehydration, Maillard reactions, caramelisation, pyrolysis, hydrolysis, and fragmentation.

Bitterness in coffee is a known result of the roasting process. It is not only influenced by the level of roast (darker coffees are known to be more bitter), but also by the coffee variety and the chemical composition (flavour precursors) of the green bean.

It is well established that the bitter taste in coffee is disliked by a significant proportion of consumers. Various attempts have therefore been made to reduce the bitterness or other undesirable attributes which can be present in coffee.

EP-A1-861596 (Kraft General Foods) discloses the removal of acid precursors such as lactones and esters in a coffee extract by treatment with alkali to convert the precursors to salts followed by neutralisation with an acid selected from phosphoric acid, fumaric acid, malic acid, tartaric acid and adipic acid.

JP-A-9094080 (Fujiya KK) discloses hydrolysing coffee beans with alkali and neutralising the obtained solution with an acid so in order to reduce the acidic taste and to remove bitterness.

EP-A-474005 (Jacobs Suchard AG) relates to a process for improving the flavour of coffee extracts by separating undesirable components from the extract using an alkaline molecular sieve having a pore size of from 0.3 to 1.0nm.

JP 2001-321116 (Kikkoman Corp) discloses the use of tannase or chlorogenic acid esterase to remove bitterness and astringency from coffee beans.

It has now been found that certain phenolic compounds in coffee contribute to an increased bitterness of the product. In particular, chlorogenic acid lactones (hereinafter referred to as "CAL's") have been found to be particularly problematic in this respect.

Chlorogenic acid lactones are formed from chlorogenic acids. Both types of compounds exist in roasted coffee although chlorogenic acids are found to contribute much less, if at all, to the bitter taste than chlorogenic acid lactones.
Furthermore, chlorogenic acids have been shown to have antioxidative activity *in vitro* (e.g. radical scavenging, LDL oxidation resistance, DNA damage protection) and antimutagenic effect *in vivo* on large intestine, liver and tongue in rats and hamsters. Additionally chlorogenic acids are able to reduce systemic acid secretion in the stomach protecting the gastric mucosa against irritations possibly responsible for heartburn.

Therefore, it remains highly desirable to provide a coffee product which has reduced bitterness and which, at the same time, retains significant amounts of compounds beneficial for health.

Furthermore, it is desirable to treat a roasted coffee product so as to remove or at least reduce levels of chlorogenic acid lactones and yet maintain or at least reduce to a much lesser extent the amount of chlorogenic acids present.

Chlorogenic acid lactones are discussed in the publication "Analysis of Bitter Fractions of Roasted Coffee by LC-ESI-MS / New Chlorogenic Acid Derivatives", M. Ginz, U.H. Engelhardt, Institute of Food Chemistry, Technical University of Braunschweig, Schleinitzstrasse 20, DE-38118, Germany. This document relates to isolation of chlorogenic acid lactones from coffee and investigates the contribution of such lactones to the perceivable bitterness of the roasted coffee beverage. Nevertheless, it gives no indication as to how to prepare a roasted coffee product having reduced levels of chlorogenic acid lactones but substantially maintained levels of chlorogenic acids.

In addition, none of the documents referred to above appears to differentiate between chlorogenic acids and chlorogenic acid lactones and so does not address the problem of how to deplete the latter component without simultaneously reducing significantly the content of chlorogenic acids.

In view of the foregoing, the present invention seeks to provide one or more of the abovementioned benefits and/or to address one or more of the abovementioned problems.

### Summary of the Invention

Thus, according to a first aspect of the present invention there is provided a coffee product derived from roast and ground coffee beans wherein the weight ratio of 5CQA to 3CQAL (vide infra) in the product is 10:1 or more.

According to another aspect of the present invention there is provided a soluble coffee product derived from roast and ground coffee beans wherein the weight ratio of total CQA (3CQA+4CQA+5CQA) to 3CQAL is 20:1 or more

In yet another aspect, the invention provides a method of preparing a liquid coffee composition having reduced chlorogenic acid lactones content comprising the step of treating a coffee extract with an enzyme so as to hydrolyse at least a portion of the chlorogenic acid lactones present in the extract.

In still another aspect, the invention provides the use of an enzyme in the treatment of a coffee product, such as a coffee extract, to reduce the bitterness of a coffee beverage, wherein the enzyme selectively removes CAL's in preference to chlorogenic acids.

The level of CALs may also be reduced by contacting a coffee extract with a sorbent or a solvent under certain conditions.

Thus, the invention also relates to a method of treating a coffee composition extract in order to reduce the level of CALs comprising the steps of:
(i) roasting and grinding coffee beans to provide a ground product;
(ii) extracting the ground product with water and/or steam to obtain an extract; and
(iii) contacting the extract with a sorbent
wherein the sorbent is suitable for removing apolar components and is at least partially saturated with chlorogenic acid and, optionally caffeine.

In this further aspect, the invention also provides the use of a solid sorbent as defined hereinabove to remove CALs from a coffee extract to provide a coffee composition having reduced bitterness.

The invention additionally relates to a method of treating a coffee composition extract in order to reduce the level of CALs comprising the steps of:
(i) roasting and grinding coffee beans to provide a ground product;
(ii) extracting the ground product with water and/or steam to obtain an extract; and
(iii) contacting the extract with an organic solvent
wherein the solvent is suitable for removing apolar components and is at least partially saturated with chlorogenic acid and, optionally caffeine.

In this aspect, the invention also provides the use of an organic solvent as defined hereinabove to remove CALs from a coffee extract to provide a coffee composition having reduced bitterness.

In the context of the present invention, the term "comprising" is non-exhaustive and does not limit the steps, ingredients or components to those specified after the term "comprising" but is defined as meaning "including but not limited to".

### Detailed Description of the Invention

The present invention is directed to products having a reduced amount of CALSand a maintained or, at least not significantly reduced amount of chlorogenic acids. CALs denotes a class of compounds which have the general structures A or B depicted in the Figure below. Groups OR₃, OR₄ and OR₅ can be either one of two possible epimers. The groups R₃, R₄ and R₅ are independently selected from caffeoyl, feruloyl, coumaroyl, dimethoxycinnamoyl, sinapoyl or H or mixtures thereof. Where groups R₃ to R₅ comprise one or more acyl chains, the double bond in the acyl chain can be in the "trans" or in the "cis" configuration. Chlorogenic acids have the general structure C shown in the figure below.

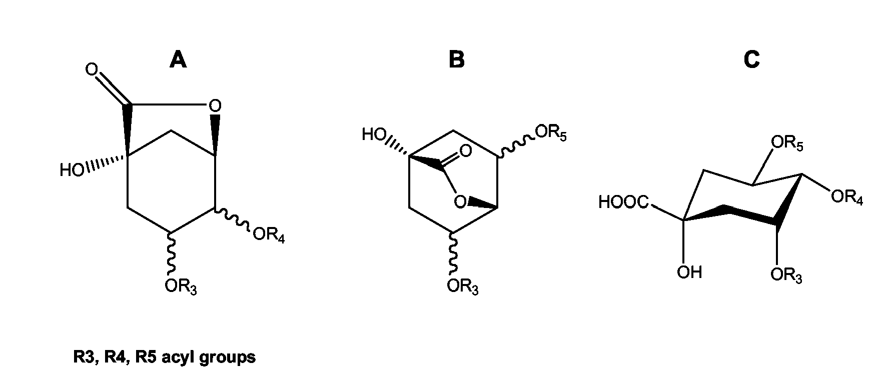

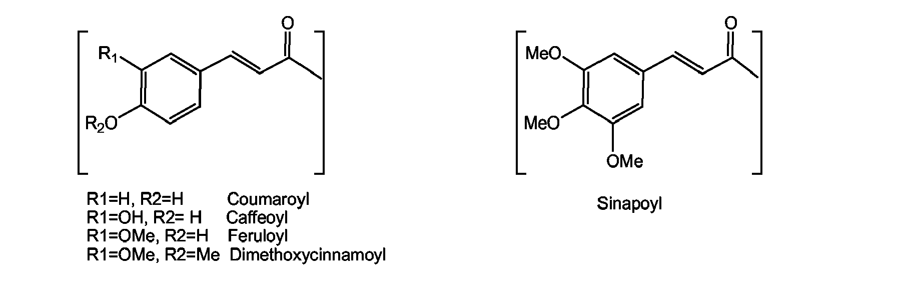

Examples of some known chlorogenic acid lactones and chlorogenic acids are given in the following table.

**Table 1**

| Name | Structure | R3 | R4 | R5 |
|---|---|---|---|---|
| **Quinic acid lactone derivatives** | | | | |
| 3-*O*-caffeoyl-D-quinic acid lactone (3CQAL) | A | caffeoyl | H | - |
| 4-*O*-caffeoyl-D-quinic acid lactone (4CQAL) | A | H | caffeoyl | - |
| 3-*O*-feruloyl-D-quinic acid lactone (3FQAL) | A | feruloyl | H | - |
| 4-*O*- feruloyl-D-quinic acid lactone (4FQAL) | A | H | feruloyl | - |

| **Chlorogenic acid derivatives** | | | | |
|---|---|---|---|---|
| 5-*O*- caffeoyl-D-quinic acid (5CQA) | C | H | H | caffeoyl |
| 4-*O*- caffeoyl-D-quinic acid (4CQA) | C | H | caffeoyl | H |
| 3-*O*- caffeoyl-D-quinic acid (3CQA) | C | caffeoyl | H | H |
| Total CQA =3CQA + 4CQA + 5CQA | C | | | |

It is to be understood that other CAL's may exist and may even be present in coffee and that the term CAL embraces all compounds falling within formulae A or B as shown above.

It has now been found that 3-*O*-caffeoyl-D-quinic acid lactone (herein referred to as "3CQAL") is particularly representative of all CALs in that measurements showing the effect of treatments on 3CQAL are fully indicative of the effects of such treatments on CALs generally.

Thus, it is important that the level of 3CQAL is significantly reduced in the fmal product.

At the same time, it is desirable that the amount of chlorogenic acids (referred to herein as "CQAs") which are the precursors of CALs is maintained or at least reduced to a much lesser degree for the reasons given herein.

5-*O*-caffeoyl-D-quinic acid (herein referred to as "5CQA") is particularly representative of all CQA's in that measurements showing the effect of treatments on 5CQA are fully indicative of the effects of such treatments on CALs generally.

Therefore, in one aspect, it is essential that the weight ratio of 5CQA to 3CQAL is 10:1 1 or more, preferably 15:1 or more, more preferably 20:1 or more, most preferably 50:1 or more, e.g. 80:1 or more.

In a further aspect, the products according to the invention have also an increased weight ratio of total CQA (the sum of 3CQA, 4CQA and 5CQA) to 3CQAL. Thus, the weight ratio of total CQA to 3CQAL is 20:1 or more, preferably 30:1 or more, more preferably 40:1 or more, most preferably 50:1 or more, e.g. 80:1 or more.

It has also been found that products suitable for use in the present invention can have a reduced level of 3CQAL relative to the level of caffeine present. Thus, products according to the invention may alternatively and/or additionally be defined by the relative level of caffeine and 3CQAL.

Maintaining the level of caffeine or at least reducing it to a much lesser degree than the 3CQAL can also be highly desirable. For instance, caffeine is known to improve short-term mental alertness.

Thus, the weight ratio of caffeine to 3CQAL is preferably 40:1 or more, more preferably 70:1 or more, even more preferably 100:1 1 or more, most preferably 130:1 or more, e.g. 200:1 or more.

### Enzyme treatment

The stage during the coffee processing at which the enzyme treatment is carried out is not essential as long as it occurs prior to formation of the final soluble coffee product. Therefore, the enzyme treatment can occur on coffee beans which are roasted, ground and/or extracted. Most preferably the enzyme treatment is carried out on the extracted product.

By "extracted" it is meant that water and/or steam has been used to extract the complex mixture of coffee components from the roasted, ground coffee bean.

### Enzymes

In one aspect, the products of the present invention are prepared using one or more enzymes.

Preferred enzymes are selected from hydrolases such as esterases, lipases, tannase, and carbonic anhydrase or mixtures thereof.

Esterases (EC 3.1.1.1) are particularly preferred. An especially preferred esterase is immobilised hog liver esterase. Another suitable esterase is, for example, porcine liver esterase.

Tannase (EC 3.1.1.20) suitable for use in the present invention includes tannase from Aspergillus oryzae, immobilised on Eupergit C. This immobilised tannase is described in EP-A-0777972.

Examples of suitable lipases (EC 3.1.1.3) include Candida rugosa lipase, Geotrichum Candidum lipase, Aspergillus niger lipase and palatase.

Carbonic anhydrase (EC 4.2.2.1) is also suitable for use in the present invention.

### Methodology

A coffee beverage is generally produced in three steps involving roasting of the green beans, grinding of the roasted beans and then extraction of the coffee components from the ground beans.

In a first preferred method, the coffee grounds are extracted with water and/or steam under specific temperature and pressure gradients according to soluble coffee manufacturing processes known to the person skilled in the art. The resulting extract is then contacted with the enzyme to hydrolyse preferentially the CALs and preserve the CQAs as much as possible.

In a second preferred method, the soluble coffee beverage is prepared by typical home brew extraction, as for example filter brew. The coffee extract is submitted to the enzymatic treatment as described below.

The enzyme can be contacted with the coffee extract in any manner as long as it enables sufficient contact time for the CALs to be adequately transformed. The enzyme is then removed from the mixture or, alternatively, can merely be deactivated. For instance, a non-immobilised enzyme can be added directly to the coffee, in which case at the end of the reaction, the enzyme is simply deactivated.

Alternatively, the enzyme can be fixed on a filter bed or held in a column and the extract passed therethrough. With treatment using immobilised enzymes, the procedure can be batchwise (e.g. the enzymes are added, reacted then filtered out) and/or continuous (e.g. in a column or a fixed bed reactor with coffee solution flowing therethrough).

The amount of enzyme used will depend on the individual enzyme preparation, the activity of the enzyme and its specificity.

For hog liver esterase, for instance, the amount should preferably be within the range of from 0.005U/mg to 100U/mg of dry matter in the coffee extract, more preferably from 0.007 to 50 U/mg, most preferably from 0.01 to 10U/mg, e.g. 0.2 to 1U/mg.

The temperature at which the enzymatic reaction should occur is preferably within the range of from 10 to 80°C, more preferably from 20 to 60°C, most preferably from 30 to 50°C.

The pH of the solution during the reaction is preferably from 4.0 to 8.0, more preferably from 4.5 to 7.0, most preferably from 5.0 to 6.5.

The reaction time is typically from 1 minute to 72 hours, preferably from 1 hour to 24 hours, most preferably from 1 hour to 4 hours.

The amount of dry extract in the coffee should preferably lie within the range of from 1g/l to 500g/l, more preferably from 10g/l to 100g/l

### Sorbent Treatment

Alternatively and/or additionally, the product according to the invention can be prepared by contacting an aqueous coffee extract with a sorbent under certain conditions.

### Sorbent

The sorbent is preferably selected from those which are suitable for retaining apolar components.

Particularly preferred sorbents for use in the method of the present invention include active charcoal, polystyrene divinylbenzene (available as XAD4, XAD16, ex Supelco), PVPP (available as Polyclar, ex Sigma) and Eupergit C et C 250L (copolymers of N,N'-methylene-bis-(methacrylamide), glycidyl methacrylate, allyl glycidyl ether and methacylamide, ex Rohm GmbH).

The most preferred is XAD16 because of its selectivity for apolar compounds and its suitability for continuous processing.

The sorbent is at least partially saturated with chlorogenic acids and, optionally caffeine. This helps to prevent the removal of chlorogenic acids and caffeine from the extract when passed through the sorbent.

Partial or complete saturation can be achieved by-presaturating the sorbent with the specific desired compounds. Alternatively, two or more batches of sacrificial coffee extract can be passed through the sorbent so as to saturate it with the desired compounds. It has been found that when 2 sacrificial batches are used at a ratio of 1g coffee extract to 1g sorbent per batch, the uptake of chlorogenic acids and caffeine from further extracts is dramatically reduced.

In order that the sorbent can be at least partially saturated with chlorogenic acids and, optionally caffeine, it is desirable that the sorbent is in solid form.

It is particularly preferred that the sorbent is granulated, although the sorbent can be in gel form, present as a matrix or in any other suitable form through which the coffee extract can be passed.

Preferably the granulated sorbent has a particle size of 10 to 100, more preferably 20 to 60 mesh (wet). It is desirable that the average pore diameter is from 50 to 150, more preferably from 80 to 120A. The pore volume is preferably from 1.4 to 2.2, more preferably from 1.6 to 2.0mL/g and the surface area of the sorbent should preferably be from 500 to 1300, more preferably from 650 to 950 m²/g.

The invention also provides the use of a solid sorbent in the treatment of a coffee extract so as to reduce the level of CALs and thereby provide a coffee composition having reduced bitterness.

The solid sorbent is typically provided in a column or other suitable container through which the coffee composition can be passed. Although the nature of the container is not essential to the invention, it is important that the sorbent is immobilized in the container. This can be achieved by, for instance, providing a column having filter means at either end, the filter means having a pore size smaller than the diameter of the sorbent.

Alternatively, the sorbent may be immobilized on a solid support which is located within the container and removable therefrom. This is advantageous since it allows the sorbent to be removed, e.g. for replacement once it is no longer effective, and a new sorbent to be introduced without having to disassemble the container.

### Methodology

In a first preferred method, a coffee extract is firstly prepared by roasting and grinding coffee beans to provide a ground product followed by extracting a coffee liquor from the ground product using water.

In a batch mode, a part of the extract is then treated with a portion of solid sorbent, preferably in a ratio of 1g coffee extract (Tc) to 1g of sorbent. After stirring, the coffee extract is filtered off and the recovered sorbent used for the treatment a further portion of extract in the same manner. This procedure is repeated several times until the sorbent is exhausted. It is then replaced by a fresh portion.

In a continuous mode, the extract is treated with a sorbent, preferably a solid sorbent, which is immobilized in a container, preferably a column, e.g. a glass or stainless steel column, by passing the extract through the container at a rate readily determined by the person skilled in the art. When the sorbent is exhausted, it is removed and replaced by a portion of fresh sorbent.

The treated coffee extract can then be used for production of liquid and/or solid coffee products according to conventional processes.

### Solvent extraction

Products according to the invention can also be prepared by solvent extraction using a solvent which is at least partially saturated with chlorogenic acid and, optionally caffeine.

The solvent is a water immiscible organic solvent and is preferably selected from those which are suitable for extracting apolar components. Particularly preferred solvents include hexane, dichloromethane, diethyl ether or ethyl acetate.

The most preferred solvent is ethyl acetate because of its volatility and ease of removal.

The extraction is preferably liquid/liquid (coffee extract / solvent) although solid/liquid extraction (coffee grounds or solluble coffee powder / solvent) is also possible.

### Methodology

An aqueous coffee extract is firstly prepared by as described above.
A portion of the aqueous extract is then treated with an equal volume of ethyl acetate in an extraction funnel. After separation of the two liquid phases, the partially saturated organic phase is reused for a series of further portions of coffee extract.

### End Products

The extract which is treated using enzymes, sorbents or solvent extraction can then be used to make a variety of different end products. For instance, the treated extract can be freeze-dried or spray-dried in a conventional manner to form an instant soluble coffee product.

Alternatively, the extract can be used for a liquid coffee concentrate or, for instance, a ready to drink beverage. For all of the preparations above, the coffee end product can also be found in combination with one or more other ingredients such as flavours, milk, creamers, chicory, cereals and sugar.

### Examples

The invention will now be illustrated by the following non-limiting examples. Samples according to the invention are denoted by a number and comparative samples by a letter.

### Example 1: Enzymatic Treatment of Soluble Coffee

Robusta coffee beans were roasted and ground. An aqueous extract was then prepared by treating the ground coffee beans at a temperature of from 110 to 130°C so as to extract a yield of about 25 wt% of the total weight of the ground coffee beans. The extract was spray dried.

15 g of dried coffee extract were dissolved in 500 ml of boiling water. After cooling to room temperature, the coffee solution (50 ml) was distributed into eight 100 ml flasks. Various amounts of immobilized hog liver esterase (0.2 U/mg of coffee, 0.5 U/mg of coffee, and 1 U/mg of coffee) were added to the coffee solutions. The flasks were immersed in a water bath heated to 40°C and samples were withdrawn after 0 h, 2 h and 4 h reaction times. The mixtures were filtered (filters of 150 mm of diameter) to remove the enzyme and the obtained coffee solutions were diluted to 1.3% t.s. for sensory analysis.

### Sample Analysis

Coffee samples were prepared at 1% t.s. in 70% MeOH and filtered through 0.45 µm pore size syringe filters (Millipore SLHA 025 BS). Chlorogenic acids, lactones and caffeine were quantified by HPLC. Analysis was performed using an integrated Agilent-1100 system including binary pump, autosampler, column oven, UV detector (Agilent, Palo Alto, CA) and a Q-Trap tandem mass spectrometer (AB/MDS Sciex, Concord, Canada). 1% t.s. solutions (5 µL) were injected into a CC 250/4 Nucleosil 100-5-C18 column (Macherey-Nagel, Oensingen, Switzerland). The eluent system was Millipore water, 0.1 % TFA and CH₃CN or Millipore water, 0.1 % HCOOH and MeOH at 1 mL/min. External calibration curves with commercially available or synthetic standards in the range 10-200 µg/mL were used to quantify the individual compounds.

**Table 2**

| **Sample** | **Enzyme (1)** | **Time (hours)** | **3CQAL (2)** | **Total CQA (2)** | **5CQA: 3CQAL (3)** | **total CQA : 3CQAL (3)** | **caffeine: 3CQAL (3)** |
|---|---|---|---|---|---|---|---|
| A | 0 | 0 | 100 | 100 | 9.4 | 20 | 34 |
| B | 0 | 2 | 98.6 | 100.6 | 8.2 | 17 | 30 |
| 1 | 0.2 | 2 | 47.7 | 101.2 | 19 | 41 | 70 |
| 2 | 0.5 | 2 | 13.5 | 100.6 | 59 | 128 | 217 |
| 3 | 1 | 2 | 2.0 | 75.6 | 185 | 650 | 1468 |
| C | 0 | 4 | 95.3 | 100.2 | 8.4 | 18 | 30 |
| 4 | 0.2 | 4 | 23.8 | 100.3 | 33 | 72 | 123 |
| 5 | 0.5 | 4 | 2.7 | 99.4 | 286 | 620 | 1063 |
| 6 | 1 | 4 | n.d. | 76.9 | 6570 | 21957 | 48663 |

| | | | | | | | |
|---|---|---|---|---|---|---|---|
| (1) Hog liver esterase (U/mg coffee) (2) % by weight relative to the total amount present in the untreated extract (3) weight ratio | | | | | | | |

### Sensory Evaluation

The evaluation of coffees was conducted with a panel of 6 to 9 panellists. Each participant was presented with samples and asked to rank them for their bitterness and to score them on a linear scale from 0 to 10 where 0 denotes no bitterness and 10 denotes extremely bitter. Rinsing between samples was carried out with water and a piece of peeled apple. A 1 minute break was included between each series of samples to avoid carry over. Data acquisition was performed with FIZZ software (Biosystemes, Couternon, France. The panel mean score for "bitterness intensity" was calculated and treated by Analysis of Variance. This test enables calculation of the F value (Fischer test) and determination of whether a significant difference of bitterness exists between samples. The results are given in the following table.

**Table 3: Sensory results for enzymatically treated samples**

| **Sample** | **Coffee** | **Hog liver esterase (U/mg)** | **Time (h)** | **Bitterness intensity (panel mean score)** |
|---|---|---|---|---|
| A | 50 ml, 3%t.s. | 0 | 0 | 8.0 |
| B | 50 ml, 3%t.s. | 0 | 2 | n.d. |
| 1 | 50 ml, 3%t.s. | 0.2 | 2 | 4.3 |
| 2 | 50 ml, 3%t.s. | 0.5 | 2 | n.d. |
| 3 | 50 ml, 3%t.s. | 1 | 2 | 3.3 |
| C | 50 ml, 3%t.s. | 0 | 4 | n.d. |
| 4 | 50 ml, 3%t.s. | 0.2 | 4 | 5.5 |
| 5 | 50 ml, 3%t.s. | 0.5 | 4 | 4.2 |
| 6 | 50 ml, 3%t.s. | 1 | 4 | 4.0 |

| | | | | |
|---|---|---|---|---|
| n.d. denotes not determined | | | | |

The results demonstrate that all the enzyme-treated samples achieved significantly lower bitterness scores than the reference sample (F-test, P< 0.05).

### Example 2: Treatment with sorbents

Robusta coffee extract was obtained as described in example 1.

### Method 1 (samples 7 to 14)

3g of Polyclar/PVPP (ex Sigma) or 3g of active charcoal (Norit C granular) or 3g of XAD4 or XAD16 (both ex Supelco) were added to 3 g of the Robusta extract in 200 mL of Millipore water. The suspension was stirred at room temperature for 2.5 h and filtered over filter paper (+Celite in the case of active charcoal). The recovered and partially saturated sorbent was used for two further, consecutive batches of fresh coffee in the same manner. The filtrates were freeze-dried in a Virtis Benchtop K apparatus.

### Method 2 (sample 15)

Continuous treatment on XAD16 (30 g, column 2 cm internal diameter x 20 cm height) was performed as follows. The sorbent was suspended in water and washed with water, ethanol and again water and then filled into the column. The coffee extract, 1.5% t.s. was continuously eluted through it. 200 mL fractions were collected at a flow rate of 20 mL/min and freeze-dried as described above.

### Sample Analysis

The samples were analysed by HPLC as described above. The results are given below

**Table 4: Solid phase treatment with fresh and partially saturated sorbents.**

| **Sample** | **Sorbent (1)** | **Cycle (2)** | **Total Yield (3)** | **Total CQA (3)** | **Caffeine (3)** | **5CQA: 3CQAL (4)** | **total CQA: 3CQAL (4)** | **caffeine: 3CQAL (4)** |
|---|---|---|---|---|---|---|---|---|
| 7 | P | 1 | 75 | 81 | 83 | 36 | 76 | 142 |
| 8 | P | 3 | 86 | 95 | 91 | 21 | 45 | 78 |
| 9 | C | 1 | 53 | 43 | 16 | 83 | 185 | 121 |
| 10 | C | 3 | 77 | 86 | 74 | 23 | 50 | 78 |
| 11 | XAD16 | 1 | 75 | 90 | 59 | 22 | 48 | 58 |
| 12 | XAD16 | 3 | 84 | 93 | 90 | 7.6 | 16 | 28 |
| 13 | XAD4 | 1 | 82 | 88 | 54 | 16 | 35 | 40 |
| 14 | XAD4 | 3 | 91 | 98 | 91 | 11 | 24 | 40 |
| 15 | XAD16 | 9 | 91 | 119 | 99 | 30 | 62 | 100 |
| D | None | None | 100 | 100 | 100 | 9 | 20 | 34 |

| | | | | | | | | |
|---|---|---|---|---|---|---|---|---|
| (1) P denotes Polyclar, C denotes activated charcoal, XAD4/ XAD16 denotes polystyrene divinylbenzene (2) Cycle "1" denotes that the sorbent is fresh, Cycle "3" denotes that the sorbent is partially saturated (2 batches of extract having already passed through the sorbent, the measurement being taken on the third batch). (3) % by weight relative to the total amount present in the untreated extract. (4) weight ratio | | | | | | | | |

### Sensory evaluation

The evaluation of coffee fractions was conducted as described above. The results are given in the following tables.

**Table 5: Sensory results for treatments according to Method 1**

| **Sample** | **Bitterness intensity (panel mean score)** |
|---|---|
| 7 | 3.3 |
| 8 | 4.7 |
| 9 | 1.8 |
| 10 | 4.0 |
| 11 | 2.0 |
| 12 | 4.1 |
| 13 | 3.0 |
| 14 | 5.1 |
| D | 7.0 |

**Table 6: Sensory results for treatments according to Method 2**

| **Sample** | **Bitterness intensity (panel mean score)** |
|---|---|
| 15 | 2.6 |
| D | 5.4 |

The results demonstrate that all the sorbent-treated samples achieved significantly lower bitterness scores than the reference sample (F-test, P<0.05).

### Example 3: Solvent extraction

Robusta coffee extract was obtained as described in example 1. 3g of Robusta extract dissolved in 200 mL of Millipore water were extracted with 200 mL of ethyl acetate. The organic extract was used to treat a second batch of fresh coffee extract (3g in 200 mL) and step two was repeated a further two times. The resulting coffee extracts were separately stripped with ethanol (3 times each) and fmally freeze-dried.

### Sensory/analytical evaluation

The sensory/analytical evaluation of coffee fractions was conducted as described above. The results are given in the following table.

**Table 7 : liquid/liquid extraction with partially saturated ethyl acetate**

| **Sample** | **Cycles (1)** | **Yield from extract (2)** | **Sensory score (3)** | **5CQA: 3CQAL (4)** | **total CQA: 3CQAL (4)** | **caffeine: 3CQAL (4)** |
|---|---|---|---|---|---|---|
| 16 | 1 | 72 | 2.9 | 132 | 279 | 308 |
| 17 | 4 | 97 | 5.4 | 34 | 73 | 127 |
| D | 0 | 100 | 7.0 | 9 | 20 | 34 |

| | | | | | | |
|---|---|---|---|---|---|---|
| (1) Cycle "1" denotes that the solvent is fresh; cycle "4" denotes that the solvent is partially saturated (3 batches of extract having been previously extracted) (2) % by weight relative to the total amount present in the untreated extract (3) Bitterness intensity (panel mean score) (4) weight ratio | | | | | | |

The results demonstrate that all the solvent-treated samples achieved significantly lower bitterness scores than the reference sample (F-test, P<0.05).

Although the invention has been described with reference to specific embodiments, this description is not meant to be construed in a limited sense. Various modifications of the disclosed embodiments, as well as alternative embodiments of the inventions will become apparent to persons skilled in the art upon the reference to the description of the invention. It is, therefore, contemplated that the appended claims will cover such modifications that fall within the scope of the invention.

## Claims

1. A coffee product derived from roast and ground coffee beans wherein the weight ratio of 5CQA to 3CQAL in the product is 10:1 or more.

2. A coffee product as claimed in claim 1 wherein the weight ratio of 5CQA to 3CQAL is 15:1 or more.

3. A coffee product as claimed in claim 1 wherein the weight ratio of 5CQA to 3CQAL is 50:1 or more.

4. A coffee product derived from roast and ground coffee beans wherein the weight ratio of total CQA to 3CQAL is 20:1 or more.

5. A coffee product as claimed any one of the preceding claims obtainable by treating a coffee extract with an enzyme.

6. A coffee product as claimed in claim 5 wherein the enzyme is a hydrolase.

7. A coffee product as claimed in claim 6 wherein the hydrolase is an esterase.

8. A coffee product as claimed in claim 7 wherein the esterase is hog liver esterase or porcine liver esterase.

9. A method of preparing a liquid coffee product having reduced levels of chlorogenic acid lactone content comprising the step of:
(i) treating a coffee extract with an enzyme so as to hydrolyse at least a portion of the chlorogenic acid lactones present in the extract.

10. A method as claimed in claim 9 wherein the enzyme is an esterase, preferably hog liver esterase or porcine liver esterase.

11. Use of an enzyme in the treatment of a coffee product, such as a coffee extract, to reduce the bitterness of a coffee beverage, wherein the enzyme selectively reduces the amount of CALs in preference to CQA's.

12. A method of treating a coffee product in order to reduce the level of CALs comprising the steps of:
(i) roasting and grinding coffee beans to provide a ground product;
(ii) extracting the ground product with water and/or steam to obtain an extract; and
(iii) contacting the extract with a sorbent
wherein the sorbent is suitable for removing apolar components and is at least partially saturated with chlorogenic acid and, optionally caffeine.

13. A method as claimed in claim 12 wherein the sorbent is selected from the group consisting of (i) activated charcoal, (ii) PVPP, (iii) polystyrene divinylbenzene and (iv) copolymers of N,N'-methylene-bis-(methacrylamide), glycidyl methacrylate, allyl glycidyl ether and methacylamide.

14. Use of a solid sorbent as defined in claim 12 or claim 13 to remove CALs from a coffee extract to provide a coffee composition having reduced bitterness.

15. A method of treating a coffee extract in order to reduce the level of CALs comprising the steps of:
(i) roasting and grinding coffee beans to provide a ground product;
(ii) extracting the ground product with water to obtain an extract; and
(iii) contacting the extract with an organic solvent
wherein the solvent is suitable for removing apolar components and is at least partially saturated with chlorogenic acid and, optionally caffeine.

16. A method as claimed in claim 15 wherein the solvent is selected from the group consisting of hexane, dichloromethane, diethyl ether and ethyl acetate.

17. A method as claimed in claim 15 wherein the solvent is ethyl acetate.

18. A method according claim any one of claims 15 to 17 wherein the solvent which is at least partially saturated with chlorogenic acid is prepared by
(i) mixing the solvent with a sacrificial aqueous coffee extract;
(ii) separating the partially saturated solvent from the used extract; and

19. Use of an organic solvent as defined in claim 15 to remove CALs from a coffee extract to provide a coffee composition having reduced bitterness.
